# FASCICULE DE BREVET EUROPEEN

(11) **EP 1 562 243 B1**
(45) Date de publication et mention de la délivrance du brevet: **26.07.2006**
(21) Numéro de dépôt: 04405063.1
(22) Date de dépôt: 02.02.2004
(51) Int. Cl.: H01M 4/72, H01M 4/74, H01M 4/64, H01M 8/02, H01M 8/10

(54) **Procédé de réalisation d'un ensemble collecteur de courant-membrane pour pile à combustible**
Verfahren zur Herstellung eines Stromkollektor-Membran Verbundes für Brennstoffzellen
Method for producing a collector-membrane composite for fuel cells

(43) Date de publication de la demande: 10.08.2005
(73) Titulaire: CSEM Centre Suisse d'Electronique et de Microtechnique SA Recherche et Développement, 2007 Neuchâtel (CH)
(72) Inventeur: Cardot, Francis, 2000 Neuchâtel (CH)
(74) Mandataire: GLN

(56) Documents cités:
- EP-A- 1 026 768
- EP-A- 1 258 937

## Description

La présente invention se rapporte au domaine des piles à combustible. Elle concerne, plus particulièrement, un procédé de réalisation d'un ensemble collecteur de courant-membrane ionique du type utilisé dans les piles à combustible miniatures. L'invention concerne également l'ensemble obtenu selon ce procédé.

Une pile à combustible est décrite dans le document FR 03 07 967. Comme représenté schématiquement à la figure 1, une membrane ionique 10 est disposée entre une anode 11 et une cathode 12. Des collecteurs 13 sont placés entre ces électrodes et la membrane. Ils délimitent des canaux pour le passage des réactifs participant à la réaction électrolytique et sont constitués de dépôts métalliques en forme de grille ou de peigne. Une couche de catalyseur 14 est avantageusement interposée soit entre la membrane et le collecteur (partie gauche de la figure), soit entre le collecteur et l'électrode (partie droite de la figure).

Dans le cas d'une pile à membrane échangeuse de protons, l'anode 11 est le siège d'une réaction dont le réactif est de l'hydrogène. Les protons formés à cette électrode traversent la membrane 10 et réagissent à la cathode 12 avec un réactif constitué d'oxygène pour former de l'eau.

Les collecteurs peuvent être déposés directement sur une seule face d'une membrane cationique de type Nafion®. Par contre, la création du collecteur de pôle inverse sur l'autre face de la membrane nécessite une technologie différente conduisant à fabriquer le collecteur indépendamment puis à le reporter sur la membrane.

La création de ces collecteurs sur une membrane anionique contraint également à effectuer une opération de report car, d'une part, il n'existe pas de procédé pour former directement une membrane anionique sur une plaquette de silicium, matériau particulièrement bien adapté à cette application et, d'autre part, les membranes de ce genre se déforment lorsqu'elles sont plongées dans un liquide, ce qui ne permet donc pas de procéder par électrolyse.

La présente invention a pour but de fournir un procédé permettant de créer un ensemble collecteur de courant-membrane en évitant les inconvénients cités ci-dessus. Il convient tout aussi bien pour réaliser et transférer un collecteur sur une membrane anionique que sur une membrane cationique déjà dotée d'un premier collecteur sur l'une de ses faces. Par ailleurs, le terme de membrane sera compris comme définissant une membrane ou une membrane recouverte sur une ou deux faces par une couche de matériau catalytique.

De façon plus précise, l'invention concerne un procédé de réalisation et de transfert sur une membrane d'un collecteur de courant pour pile à combustible, caractérisé en ce qu'il comporte la suite des opérations suivantes :
- se doter d'un substrat conducteur présentant une face de faible adhérence au métal,
- déposer sur ladite face un moule doté d'ouvertures traversantes qui définissent la forme du collecteur désiré,
- réaliser le collecteur en remplissant lesdites ouvertures d'un dépôt de métal galvanique de façon à ce que ce dépôt déborde des ouvertures par un bourrelet, puis
- transférer le collecteur ainsi réalisé sur ladite membrane.

Selon un premier mode de mise en oeuvre de l'invention, le transfert du collecteur comporte la suite des opérations suivantes :
- se doter d'une membrane ionique sur laquelle a été collée une plaque support,
- presser l'un contre l'autre l'ensemble contenant le collecteur et l'ensemble contenant la membrane de manière à incruster au moins une partie du bourrelet du collecteur dans la membrane,
- éloigner ces deux ensembles l'un de l'autre de manière à ce que le collecteur se détache de son ensemble et reste fixé à la membrane, puis
- séparer ladite plaque support de la membrane.

Selon un deuxième mode de mise en oeuvre de l'invention, le transfert du collecteur comporte la suite des opérations suivantes :
- déposer de la colle à prise différée sur le bourrelet du collecteur,
- se doter d'une membrane ionique sur laquelle a été fixée une plaque support,
- appliquer l'un sur l'autre l'ensemble contenant le collecteur et l'ensemble contenant la membrane de manière à mettre en contact la colle déposée sur le bourrelet avec la membrane,
- faire prendre la colle,
- éloigner ces deux ensembles l'un de l'autre de manière à ce que le collecteur se détache de son ensemble et reste fixé à la membrane, puis
- séparer ladite plaque support de la membrane.

L'invention concerne également un ensemble collecteur de courant-membrane obtenu par le procédé défini ci-dessus et caractérisé en ce que le collecteur est en forme de grille et comporte au moins un secteur de plus grande surface formant une zone d'adhérence renforcée à la membrane.

L'invention concerne aussi un ensemble formé d'une membrane et de deux collecteurs de courant déposés sur ses faces, obtenu par le même procédé et caractérisé en ce que les collecteurs sont en forme de grille et décalés, dans les deux directions du plan de la membrane, de sensiblement une demi-largeur de maille.

D'autres caractéristiques apparaîtront plus loin à la lecture de la description qui suit, faite en regard du dessin annexé dans lequel :
- la figure 2 illustre les premières étapes du procédé selon l'invention,
- les figures 3 et 4 montrent respectivement les étapes suivantes du procédé selon un premier et un deuxième modes d'exécution, et
- la figure 5 illustre la position relative des deux collecteurs associés à une membrane.

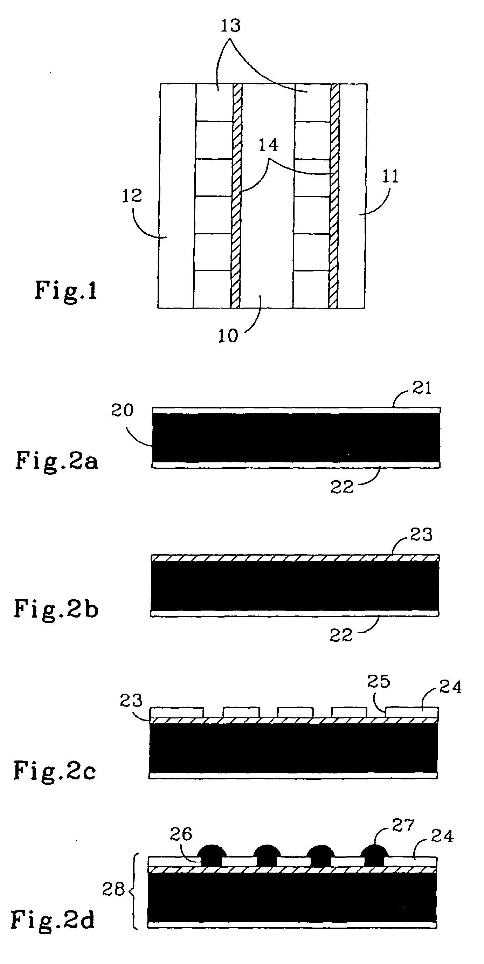

On se référera tout d'abord à la figure 2 qui détaille, en 2a, 2b, 2c et 2d, la première partie du procédé.

### Figure 2a

Au départ du procédé, on se dote d'un substrat 20 constitué d'une plaque de silicium conducteur recouverte sur ses faces supérieure et inférieure de couches de titane 21 et 22 déposées par évaporation.

### Figure 2b

La couche de titane inférieure 22 étant protégée de manière appropriée, une opération d'oxydation anodique en milieu sulfurique transforme la couche supérieure 21 en une couche d'oxyde de titane 23.

De manière générale, comme il sera expliqué plus loin, le substrat 20 doit pouvoir fournir une couche supérieure conductrice, non soudable et de faible adhérence au métal. Ainsi, le substrat peut être également réalisé en titane dont la face supérieure est transformée en oxyde de titane, réalisé par croissance anodique ou par oxydation naturelle, et la face inférieure laissée intacte. Le substrat peut aussi être simplement constitué d'une plaque d'acier inox, qui ne nécessite aucun traitement particulier.

### Figure 2c

Un moule 24 est réalisé par photo-usinage d'une couche en photorésist déposée sur la couche supérieure 23. Ce moule est le négatif du collecteur en forme de grille que l'on veut obtenir, c'est-à-dire qu'il a la forme des espaces libres 25 de cette grille.

### Figure 2d

Un dépôt galvanique 26, par exemple d'or, est effectué dans les espaces 25 du moule 24. La durée du procédé est suffisante pour que la hauteur du dépôt 26 soit supérieure à la hauteur du moule 24. Une fois qu'il a rempli le moule, le métal déborde donc en un bourrelet arrondi 27. On notera que la couche inférieure de titane 22 est utilisée comme électrode lors du procédé galvanique.

Le dépôt 26 en forme de grille ainsi constitué est le collecteur de courant que l'on cherche à réaliser. L'ensemble obtenu est désigné, sur le dessin, par la référence 28.

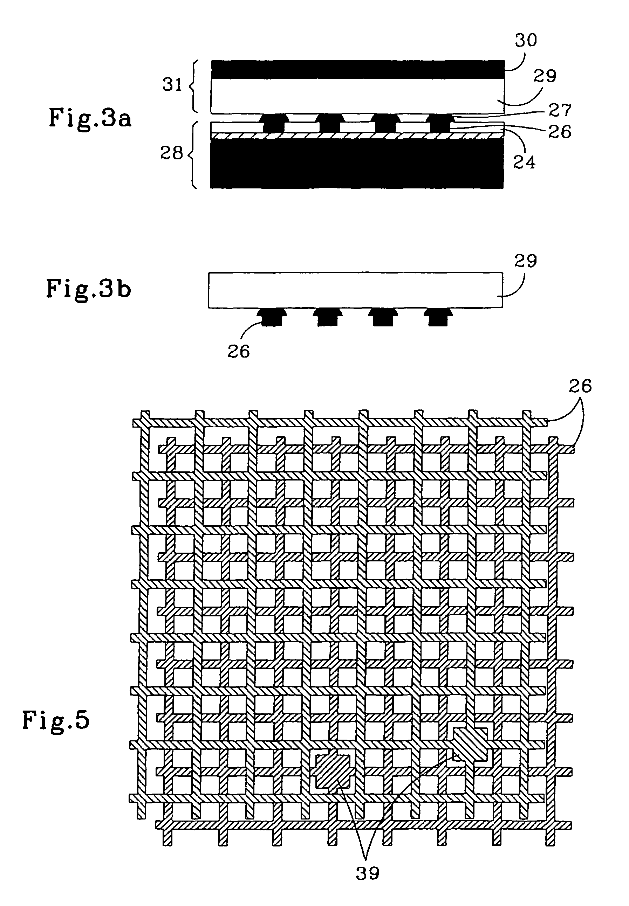

On se référera maintenant à la figure 3 qui détaille, en 3a et 3b, la deuxième partie du procédé selon un premier mode d'exécution de l'invention.

### Figure 3a

Une membrane ionique 29 a été préalablement collée sur une plaque support 30 qui peut être réalisée en un matériau choisi parmi le silicium, le quartz ou un métal quelconque. Ils forment un ensemble 31 présentant avantageusement les mêmes dimensions que l'ensemble 28.

Les deux ensembles 28 et 31 sont alors respectivement fixés sur les deux plateaux de travail d'une machine, dite de " flip chip bonding ", non représentée au dessin et bien connue de l'homme du métier, le collecteur 26 faisant face à la membrane 29.

L'alignement et la planéité des deux ensembles 28 et 31 ayant été ajustés, ils sont fortement pressés l'un contre l'autre par la machine, de manière à incruster au moins une partie des bourrelets 27 du collecteur 26 dans la membrane 29. Sous l'effet de la pression, typiquement de 3 bars et maintenue pendant 5 minutes, les bourrelets 27 adhèrent à la membrane 29.

L'adhérence peut être améliorée en chauffant les ensembles 28 et 31 à une température inférieure à 80°C dans le cas d'une membrane anionique et inférieure à 120°C dans le cas d'une membrane cationique de type Nafion®.

### Figure 3b

Lorsque les deux plateaux de la machine sont à nouveau éloignés, le collecteur 26 se détache de la couche d'oxyde de titane 23 et part avec la membrane 29.

Il suffit alors de détacher la plaque 30, par une simple action mécanique, pour obtenir un ensemble formé par la membrane 29 et le collecteur 26, directement utilisable dans une pile à combustible telle que décrite dans le document déjà cité.

Le moule en photorésit 24 peut, par ailleurs, être réutilisé pour la formation d'un nouveau collecteur.

Ainsi est proposé un premier mode de mise en oeuvre de l'invention dans lequel le collecteur de courant 26 est transféré directement sur une membrane ionique 29 destinée à être utilisée dans une pile à combustible.

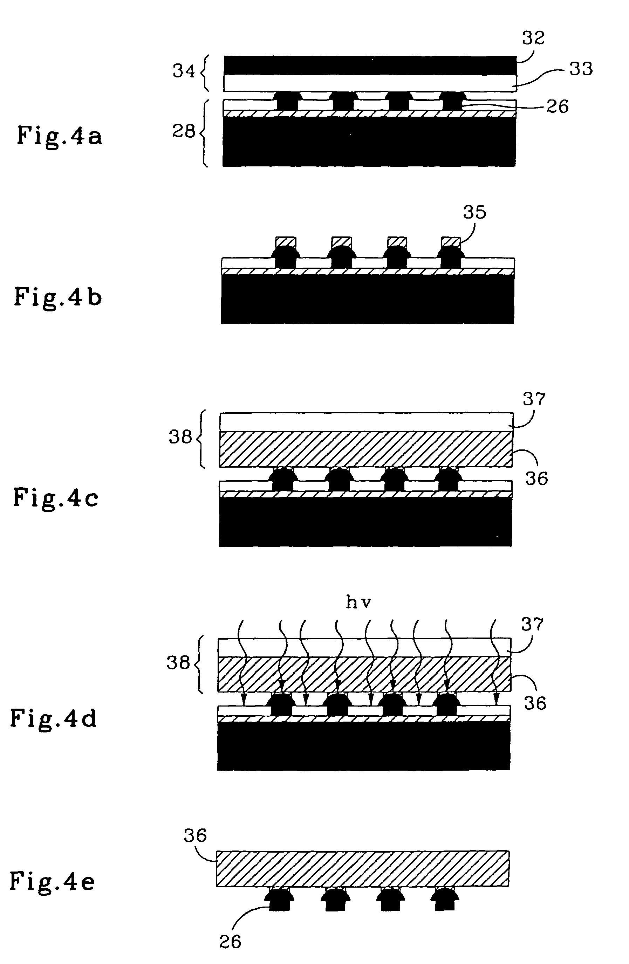

La figure 4 détaille, en 4a, 4b, 4c, 4d et 4e, la deuxième partie du procédé selon un deuxième mode de mise en oeuvre de l'invention dans lequel le collecteur de courant 26 est transféré indirectement sur la membrane ionique 29.

### Figure 4a

On se dote d'une plaque 32, de même type que la plaque 30 utilisée dans le premier mode de réalisation, qui est recouverte d'une couche de colle 33 à prise différée, par exemple une colle polymérisable par rayonnement ultraviolet. Typiquement, cette couche est étalée par une technique connue sous le nom de " spin coating " et a quelques micromètres d'épaisseur. Le tout forme un ensemble 34 présentant avantageusement les mêmes dimensions que l'ensemble 28.

Les deux ensembles 28 et 34 sont alors respectivement fixés sur les deux plateaux de travail d'une machine de " flip chip bonding ", le collecteur 26 faisant face à la couche de colle 33.

Après un réglage de la planéité entre les deux plateaux, ces derniers sont rapprochés l'un de l'autre, de manière à ce que la colle 33 mouille les bourrelets 27 du collecteur 26 mais pas le moule 24.

### Figure 4b

Lorsque les plateaux sont éloignés l'un de l'autre, des gouttes de colle 35 restent sur les bourrelets 27.

### Figure 4c

Une membrane ionique 36 a été préalablement collée sur une plaque support 37 réalisée en un matériau transparent, typiquement du quartz. Elles forment un ensemble 38 présentant avantageusement les mêmes dimensions que l'ensemble 28.

Les deux ensembles 28 et 38 sont alors respectivement fixés sur les deux plateaux de travail d'une machine de " flip chip bonding ", le collecteur 26 faisant face à la membrane 36.

Après avoir ajusté l'alignement et la planéité des deux ensembles, ces derniers sont rapprochés l'un de l'autre de manière à mettre seulement en contact les gouttes de colle 35 des bourrelets 27 avec la membrane 36.

### Figure 4d

Une source de rayonnement ultraviolet irradie les gouttes de colle 35, à travers la plaque 37 et la membrane 36, dans des conditions, bien connues de l'homme de métier, qui assurent la polymérisation de la colle in situ.

### Figure 4e

Lorsque les deux plateaux de la machine sont à nouveau éloignés, le collecteur 26 reste fixé à la membrane 36 par les plots de colle 35. Il suffit alors de retirer la plaque 37, par une simple action mécanique, pour obtenir un ensemble formé par la membrane 36 et le collecteur 26, directement utilisable dans une pile à combustible.

Selon une variante applicable aux deux modes d'exécution précédemment décrits, le moule de photorésist 24 peut être dissout par attaque chimique après avoir réalisé le dépôt galvanique du collecteur 26. Dans ce cas, la partie du collecteur 26 incrustée dans la membrane (1^{er} mode) ou recouverte de colle (2^{ème} mode) ne se limite plus à l'extrémité des bourrelets. Cette variante permet donc un meilleur ancrage et une meilleure tenue du collecteur dans la membrane.

Bien entendu, la description ci-dessus a été donnée à titre d'exemple non limitatif. Ainsi, comme en a l'habitude l'homme de métier, un élément catalytique peut encore être intégré à l'empilement formé par la membrane, le collecteur et l'électrode.

La figure 5 illustre un collecteur 26 réalisé selon le procédé décrit ci-dessus. Il est en forme de grille dont la dimension des fils est typiquement comprise entre 5 et 10 micromètres. Avantageusement, le collecteur présente, répartis dans le réseau de mailles, des secteurs 39 de plus grande surface formant des zones d'adhérence. Elles facilitent et améliorent le transfert du collecteur du support à la membrane en augmentant les forces d'adhérence du collecteur à la membrane. Les contraintes mécaniques subies par les fils des collecteurs sont ainsi réduites.

Bien entendu, le procédé selon l'invention permet de réaliser un ensemble constitué d'une membrane et de deux collecteurs déposés sur ses faces. La technique décrite s'applique de manière identique pour ces deux collecteurs. On notera cependant que, dans ce cas, ils sont décalés dans les deux directions du plan d'une demi-largeur de maille. Cette disposition est particulièrement intéressante dans le cas du deuxième mode d'exécution proposé. En effet, c'est ainsi que le collecteur transféré en premier procure le moins d'ombre lors de l'exposition au rayonnement ultra-violet de la colle utilisée pour le transfert du deuxième. De manière plus générale, l'expérience montre que cette disposition en quinconce améliore également le rendement électrochimique de la pile à combustible.

## Revendications

1. Procédé de réalisation et de transfert sur une membrane (29, 36) d'un collecteur de courant (26) pour pile à combustible, **caractérisé en ce qu'**il comporte la suite des opérations suivantes :
- se doter d'un substrat conducteur (20) présentant une face (23) de faible adhérence au métal,
- déposer sur ladite face un moule (24) doté d'ouvertures traversantes (25) qui définissent la forme du collecteur désiré,
- réaliser le collecteur (26) en remplissant lesdites ouvertures d'un dépôt galvanique de façon à ce que ce dépôt déborde des ouvertures par des bourrelets (27), puis
- transférer le collecteur (26) ainsi réalisé sur la membrane (29, 36).

2. Procédé selon la revendication 1, **caractérisé en ce que** ledit substrat (20) est une plaque de silicium conducteur dont la face destinée recevoir le collecteur est recouverte d'oxyde de titane (23) et dont l'autre face est recouverte de titane (22).

3. Procédé selon la revendication 1, **caractérisé en ce que** ledit substrat (20) est une plaque de titane dont la face destinée à recevoir le collecteur supérieur a été transformée en oxyde de titane.

4. Procédé selon la revendication 1, **caractérisé en ce que** ledit substrat (20) est une plaque d'acier inox.

5. Procédé selon l'une des revendications 1 à 4, **caractérisé en ce que** ledit moule (24) est réalisé par photo-usinage d'une plaque en photorésist déposée sur le substrat (20).

6. Procédé selon l'une des revendications 1 à 5, **caractérisé en ce que** ledit dépôt galvanique (26) est en or.

7. Procédé selon l'une des revendications 1 à 6, **caractérisé en ce que** le transfert du collecteur (26) comporte la suite des opérations suivantes :
- se doter d'une membrane ionique (29) sur laquelle a été collée une plaque support (30),
- presser l'un contre l'autre l'ensemble (28) comprenant le collecteur (26), et l'ensemble (31) contenant la membrane de manière à incruster au moins une partie des bourrelets (27) du collecteur dans la membrane,
- éloigner ces deux ensembles l'un de l'autre de manière à ce que le collecteur (26) se détache de son ensemble (28) et reste fixé à la membrane (29), puis
- séparer ladite plaque support (30) de la membrane.

8. Procédé selon l'une des revendications 1 à 6, **caractérisé en ce que** le transfert du collecteur (26) comporte la suite des opérations suivantes
- déposer de la colle (35) à prise différée sur les bourrelets (27) du collecteur,
- se doter d'une membrane ionique (36) sur laquelle a été fixée une plaque support (37),
- appliquer l'un sur l'autre l'ensemble (28) contenant le collecteur et l'ensemble (34) contenant la membrane de manière à mettre en contact la colle déposée sur le bourrelet avec la membrane,
- faire prendre la colle,
- éloigner ces deux ensembles l'un de l'autre de manière à ce que le collecteur (26) se détache de son ensemble et reste fixé à la membrane (36), puis
- séparer ladite plaque support (37) de la membrane.

9. Procédé selon la revendication 8, **caractérisé en ce que** le dépôt de colle sur les bourrelets du collecteur comporte la suite des opérations suivantes :
- se doter d'une plaque support (32) recouverte d'une couche de colle (33) à prise différée, puis
- appliquer l'un sur l'autre l'ensemble (31) contenant cette couche de colle et l'ensemble (28) contenant le collecteur de manière à mettre en contact la colle déposée sur ladite plaque avec la membrane, puis
- éloigner ces deux ensembles l'un de l'autre de manière à laisser de la colle (35) sur les bourrelets.

10. Procédé selon la revendication 9, **caractérisé en ce que** ladite plaque support (32) est en matériau transparent, **en ce que** ladite colle est photo-polymérisable et **en ce que** sa prise est réalisée par irradiation lumineuse à travers la plaque support.

11. Procédé selon l'une des revendications 1 à 10, **caractérisé en ce que** l'opération de transfert du collecteur (26) sur la membrane (29) est précédée de l'élimination du moule (24) par attaque chimique.

12. Ensemble collecteur de courant-membrane obtenu par le procédé selon l'une des revendications 1 à 11, **caractérisé en ce que** le collecteur est en forme de grille et comporte au moins un secteur (39) de plus grande surface formant une zone d'adhérence renforcée à la membrane.

13. Ensemble formé d'une membrane et de deux collecteurs (26) de courant déposés sur ses faces, obtenu par le procédé selon l'une des revendications 1 à 11, **caractérisé en ce que** les collecteurs sont en forme de grille et décalés dans les deux directions du plan de la membrane (29) de sensiblement une demi-largeur de maille.

## Claims

1. Method of producing a current collector (26) for a fuel cell and of transferring said current collector on to a membrane (29, 36), **characterized in that** it comprises the following series of operations:
- a conducting substrate (20) having a face (23) adhering weakly to metal is provided;
- a mould (24) provided with through-openings (25) that define the shape of the desired collector is deposited on said face;
- the collector (26) is produced by filling said openings with electroplated metal so that this plated metal extends beyond the openings as bumps (27); and then
- the collector (26) thus produced is transferred on to the membrane (29, 36).

2. Method according to Claim 1, **characterized in that** said substrate (20) is a plate of conducting silicon, the face of which intended to receive the collector is covered with titanium oxide (23) and the other face of which is covered with titanium (22).

3. Method according to Claim 1, **characterized in that** the substrate (20) is a titanium plate, the face of which intended to receive the upper collector has been converted to titanium oxide.

4. Method according to Claim 1, **characterized in that** said substrate (20) is a stainless-steel plate.

5. Method according to one of Claims 1 to 4, **characterized in that** said mould (24) is produced by photomachining a sheet of photoresist deposited on the substrate (20).

6. Method according to one of Claims 1 to 5, **characterized in that** said electroplated metal (26) is gold.

7. Method according to one of Claims 1 to 6, **characterized in that** the transfer of the collector (26) comprises the following series of operations:
- an ionic membrane (29) is provided, on which a support plate (30) has been bonded;
- the assembly (28) including the collector (26) and the assembly (31) containing the membrane are pressed against each other so as to encrust at least part of the collector bumps (27) into the membrane;
- these two assemblies are moved apart so that the collector (26) is detached from its assembly (28) but remains fastened to the membrane (29); and then
- said support plate (30) is separated from the membrane.

8. Method according to one of Claims 1 to 6, **characterized in that** the transfer of the collector (26) comprises the following series of operations:
- delayed-setting adhesive (35) is deposited on the bumps (27) of the collector;
- an ionic membrane (36) to which a support plate (37) has been fastened is provided;
- the assembly (28) containing the collector and the assembly (34) containing the membrane are applied one against the other in such a way as to bring the adhesive deposited on the bumps into contact with the membrane;
- the adhesive is made to set;
- these two assemblies are moved apart so that the collector (26) is detached from its assembly but remains fastened to the membrane (36); and then
- said support plate (37) is separated from the membrane.

9. Method according to Claim 8, **characterized in that** deposition of adhesive on the collector bumps comprises the following series of operations:
- a support plate (32) covered with a layer of delayed-setting adhesive (35) is provided; then
- the assembly (31) containing this adhesive layer and the assembly (28) containing the collector are applied one against the other in such a way as to bring the adhesive deposited on said plate into contact with the membrane; and then
- these two assemblies are moved apart so as to leave adhesive (35) on the bumps.

10. Method according to Claim 9, **characterized in that** said support plate (32) is made of transparent material and **in that** said adhesive is photocurable and **in that** it is made to set by light irradiation through the support plate.

11. Method according to one of Claims 1 to 10, **characterized in that** the operation of transferring the collector (26) on to the membrane (29) is preceded by the removal of the mould (24) by chemical etching.

12. Current-collector/membrane assembly obtained by the method according to one of Claims 1 to 11, **characterized in that** the collector is in the form of a grid and includes at least one sector (39) of larger area forming a region of greater adhesion to the membrane.

13. Assembly formed from a membrane and from two current collectors (26) deposited on its faces, said assembly being obtained by the method according to one of Claims 1 to 11, **characterized in that** the collectors are in the form of a grid and are offset in two directions in the plane of the membrane (29) by approximately a mesh half-width.

## Patentansprüche

1. Verfahren zur Herstellung eines Stromkollektors (26) für eine Brennstoffzelle und Übertragung auf eine Membran (29, 36), **dadurch gekennzeichnet, dass** es die folgenden Schritte umfasst:
- Dotieren mit einem leitenden Substrat (20), das eine Fläche (23) von geringer Haftung am Metall aufweist,
- Aufbringen von durchgehenden Öffnungen (25) auf die Fläche einer dotierten Form (24), die die Form des gewünschten Kollektors definieren,
- Herstellung des Kollektors (26), wobei die Öffnungen mit einer galvanischen Schicht gefüllt werden, so dass diese Schicht über Öffnungen in Wülsten (27) hinausgeht, dann
- Übertragen des so hergestellten Kollektors (26) auf die Membran (29, 36).

2. Verfahren nach Anspruch 1, **dadurch gekennzeichnet, dass** das Substrat (20) eine Platte aus leitendem Silizium ist, deren Fläche, die dazu bestimmt ist, den Kollektor aufzunehmen, mit Titanoxid (23) überzogen ist, und deren andere Fläche mit Titan (22) überzogen ist.

3. Verfahren nach Anspruch 1, **dadurch gekennzeichnet, dass** das Substrat (20) eine Titanplatte ist, deren Fläche, die dazu bestimmt ist, den oberen Kollektor aufzunehmen, in Titanoxid umgewandelt wurde.

4. Verfahren nach Anspruch 1, **dadurch gekennzeichnet, dass** das Substrat (20) eine Platte aus rostfreiem Stahl ist.

5. Verfahren nach einem der Ansprüche 1 bis 4, **dadurch gekennzeichnet, dass** die Form (24) durch Photobearbeitung einer auf das Substrat (20) aufgebrachten Platte aus Photoresist hergestellt ist.

6. Verfahren nach einem der Ansprüche 1 bis 5, **dadurch gekennzeichnet, dass** die galvanische Schicht (26) aus Gold ist.

7. Verfahren nach einem der Ansprüche 1 bis 6, **dadurch gekennzeichnet, dass** die Übertragung des Kollektors (26) die folgenden Schritte umfasst:
- Dotieren mit einer Ionenmembran (29), auf die eine Trägerplatte (30) geklebt wurde,
- Pressen der Einheit (28), umfassend den Kollektor (26), und die Einheit (31), die die Membran enthält, gegeneinander, um zumindest einen Teil der Wülste (27) des Kollektors in die Membran zu drücken,
- Entfernen dieser beiden Einheiten voneinander, damit sich der Kollektor (26) von seiner Einheit (28) löst und an der Membran (29) befestigt bleibt, dann
- Trennen der Trägerplatte (30) von der Membran.

8. Verfahren nach einem der Ansprüche 1 bis 6, **dadurch gekennzeichnet, dass** die Übertragung des Kollektors (26) die folgenden Schritte umfasst:
- Aufbringen des Klebers (35) mit verzögerter Wirkung auf die Wülste (27) des Kollektors,
- Dotieren mit einer Ionenmembran (36), auf der eine Trägerplatte (37) befestigt wurde,
- Anlegen der Einheit (28), die den Kollektor enthält, und der Einheit (34), die die Membran enthält, aneinander, um den auf den Wulst aufgebrachten Kleber mit der Membran in Kontakt zu bringen,
- den Kleber einwirken lassen,
- Entfernen dieser beiden Einheiten voneinander, so dass sich der Kollektor (26) von seiner Einheit löst und an der Membran (36) befestigt bleibt, dann
- Trennen der Trägerplatte (37) von der Membran.

9. Verfahren nach Anspruch 8, **dadurch gekennzeichnet, dass** das Aufbringen des Klebers auf die Wülste des Kollektors die folgenden Schritte umfasst:
- Dotieren mit einer Trägerplatte (32), die mit einer Kleberschicht (33) mit verzögerter Wirkung überzogen ist, dann
- Anlegen der Einheit (31), die diese Kleberschicht enthält, und der Einheit (28), die den Kollektor enthält, aneinander, um den auf die Platte aufgebrachten Kleber mit der Membran in Kontakt zu bringen, dann
- Entfernen dieser beiden Einheiten voneinander, so dass Kleber (35) auf den Wülsten bleibt.

10. Verfahren nach Anspruch 9, **dadurch gekennzeichnet, dass** die Trägerplatte (32) aus einem transparenten Material ist, dass der Kleber photopolymerisierbar ist und dass seine Wirkung durch Lichtbestrahlung durch die Trägerplatte entsteht.

11. Verfahren nach einem der Ansprüche 1 bis 10, **dadurch gekennzeichnet, dass** dem Schritt der Übertragung des Kollektors (26) auf die Membran (29) die Beseitigung der Form (24) durch chemischen Angriff vorausgeht.

12. Stromkollektor-Membran-Einheit, die durch das Verfahren nach einem der Ansprüche 1 bis 11 hergestellt wird, **dadurch gekennzeichnet, dass** der Kollektor die Form eines Gitters hat und mindestens einen Abschnitt (39) mit größerer Oberfläche aufweist, der eine Zone der verstärkten Haftung an der Membran bildet.

13. Einheit, die von einer Membran und zwei auf ihre Flächen aufgebrachten Stromkollektoren (26) gebildet und durch das Verfahren nach einem der Ansprüche 1 bis 11 hergestellt ist, **dadurch gekennzeichnet, dass** die Kollektoren die Form eines Gitters haben und in beide Richtungen der Ebene der Membran (29) um im Wesentlichen eine halbe Maschenweite versetzt sind.
